# EUROPÄISCHE PATENTSCHRIFT

(11) **EP 0 599 887 B1**
(45) Veröffentlichungstag und Bekanntmachung des Hinweises auf die Patenterteilung: **08.03.1995**
(21) Anmeldenummer: 92916579.3
(22) Anmeldetag: 04.08.1992
(51) Int. Cl.: H05B 41/04

(54) **VORRICHTUNG ZUM BETREIBEN EINER GASENTLADUNGSLAMPE**
DEVICE FOR OPERATING A GAS-DISCHARGE LAMP
DISPOSITIF POUR LE FONCTIONNEMENT D'UNE LAMPE A DECHARGE

(30) Priorität: 23.08.1991 DE 4127970
(43) Veröffentlichungstag der Anmeldung: 08.06.1994
(73) Patentinhaber: ROBERT BOSCH GMBH, 70442 Stuttgart (DE)
(72) Erfinder: BETZ, Dieter, D-7143 Vaihingen/Enz (DE); MARK, Wolfgang, D-7257 Ditzingen/Schoeckingen (DE)
(86) Internationale Anmeldenummer: DE9200645
(87) Internationale Veröffentlichungsnummer: WO9304569

(56) Entgegenhaltungen:
- EP-A- 0 185 149
- EP-A- 0 411 617
- WO-A-91/03919
- GB-A- 1 255 401

## Beschreibung

### Stand der Technik

Die Erfindung geht aus von einer Vorrichtung zum Betreiben einer Gasentladungslampe nach der Gattung des Patentanspruchs. Aus der DE-OS 39 29 029 ist eine derartige Vorrichtung bekannt, bei der eine Gasentladunglampe über ein Vorschaltgerät, das eine Drossel enthält, mit einem Energieversorgungsgerät verbunden ist. Weiterhin ist unmittelbar an der Lampe eine Einrichtung zum Zünden der Gasentladungslampe angeschlossen. Die im Vorschaltgerät enthaltene Drossel legt beispielsweise den im Betrieb der Gasentladungslampe fließenden Strom fest oder begrenzt zumindest den Strom auf einen vorgegebenen Maximalwert.

EP-A-0 411 617 offenbart eine Vorrichtung zum Betreiben einer trastentladungslampe.

EP-A-0 185 149 offenbart eine Sättigungsdrossel.

Die Zündeinrichtung stellt einen oder mehrere Zündimpulse zur Verfügung, deren Energie zum sicheren Zünden der Gasentladungslampe ausreichen muß. Bei der bekannten Vorrichtung ist nicht auszuschließen, daß ein gewisser Teil der Zündenergie in das Vorschaltgerät eingekoppelt und demzufolge nicht mehr zum Zünden der Lampe zur Verfügung steht.

Der Erfindung liegt die Aufgabe zugrunde, eine Vorrichtung zum Betreiben einer Gasentladungslampe anzugeben, bei der die von einer Zündeinrichtung aufgebrachte Zündenergie möglichst vollständig zum Zünden einer Gasentladungslampe zur Verfügung gestellt wird.

Die Aufgabe wird durch die im Patentanspruch angegebenen Merkmale gelöst.

### Vorteile der Erfindung

Die erfindungsgemäße Vorrichtung weist den Vorteil auf, daß die von der Zündeinrichtung zur Verfügung gestellte Zündenergie der Lampe vollständig zur Verfügung gestellt wird, so daß eine kostengünstige Auslegung der Zündeinrichtung möglich ist. Elektrische Bauelemente, die in dem Vorschaltgerät enthalten sind, müssen nicht für die beim Zündvorgang entstehenden hohe Zündspannungen ausgelegt sein.

Die erfindungsgemäße Vorrichtung eignet sich insbesondere zum Zünden von Hochdruck-Gasentladungslampen, die eine vergleichsweise hohe Zündspannung und eine hohe Zündenergie benötigen, insbesondere dann, wenn die Lampe betriebswarm ist.

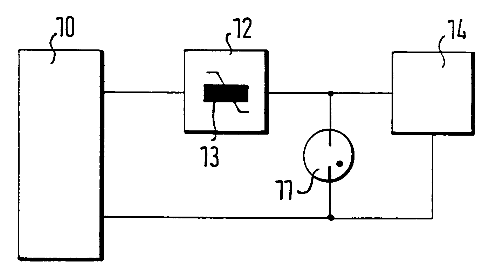

Die erfindungsgemäße Vorrichtung wird anhand der Zeichnung näher erläutert.

In der Figur ist ein Energieversorgungsgerät 10 gezeigt, das die zur Energieversorgung einer Gasentladungslampe 11 erforderlichen Spannungen und Ströme bereitstellt. Das Energieversorgungsgerät 10 ist über ein Vorschaltgerät 12 mit der Lampe 11 verbunden.

Zum Zünden der Lampe 11 ist eine Zündeinrichtung 14 vorgesehen, die einen Zündimpuls abgibt, dessen Spannung und dessen Energieinhalt zum Zünden der Lampe 11 ausreicht. Das Zünden der Lampe 11 wird von einem in der Figur nicht gezeigten Steuergerät ausgelöst, das ggf. auch das Energieversorgungsgerät 10 ansteuert.

Wenn die Zündeinrichtung 14 einen oder mehrere Zündimpulse abgibt, so wird neben der Lampe 11 auch das Vorschaltgerät 12 mit entsprechenden Impulsen beaufschlagt. Erfindungsgemäß ist vorgesehen, daß die im Vorschaltgerät 12 enthaltene Drossel 13 ein nichtlineares Verhalten aufweist. Die Drossel 13 wird im folgenden als Sättigungsdrossel bezeichnet. Mit dieser Maßnahme wird eine Abtrennung des die Zündeinrichtung 14 und die Lampe 11 enthaltenden Zündkreises während der Zündung der Lampe von weiteren elektrischen Bauelementen des Vorschaltgerätes 12 und von dem Energieversorgungsgerät 10 sichergestellt. Die Sättigungsdrossel 13 ist dabei derart auszulegen, daß die Induktivität bei einem kleinen Strom, der während des Zündvorgangs durch den kurzen Spannungsimpuls maximal erreicht werden kann, einen hohen Wert annimmt, der dem Wert der nicht gesättigten Drossel entspricht. Der nach dem Zünden der Lampe fließende, vergleichsweise hohe Betriebsstrom soll dagegen zu einer Sättigung der Drossel 13 und somit zu einer Absenkung deren Induktivität führen. Die Versorgung der Lampe mit elektrischer Energie ist im Brennbetrieb deshalb ohne wesentliche Beschränkung durch die Sättigungsdrossel 13 möglich.

Die Sättigungsdrossel 13 ist herstellbar durch eine Wicklung, die von magnetisierbarem Material umgeben ist, das durch die hohe magnetische Feldstärke, die während des Fließens des Betriebsstroms der Lampe 11 zumindest teilweise gesättigt ist, so daß die magnetische Induktion nicht mehr proportional zur magnetischen Feldstärke ansteigen kann.

## Patentansprüche

1. Vorrichtung zum Betreiben einer Gasentladungslampe (11), mit einem Vorschaltgerät (10) Energieversorgung der Lampe, das eine in Reihe mit der Lampe geschaltete Drossel (13) enthält, und mit einer an der Lampe angeschlossenen Zündeinrichtung (14), dadurch gekennzeichnet, daß die Drossel (13) als Sättigungsdrossel ausgebildet ist, deren Induktivität durch den nach dem Zünden der Lampe (11) fließenden Lampenbetriebsstrom herabgesetzt ist.

## Claims

1. Device for operating a gas discharge lamp (11), having a ballast (10) for the power supply of the lamp, which contains a reactor (13) connected in series to the lamp, and having a starting device (14) connected to the lamp, characterised in that the reactor (13) is constructed as a saturable reactor whose inductance is reduced by the lamp operating current flowing after starting of the lamp (11).

## Revendications

1. Dispositif pour faire fonctionner une lampe à décharge de gaz (11) à l'aide d'un appareil intermédiaire (12) pour alimenter en énergie la lampe, qui comprend une bobine (13) en série sur la lampe et une installation d'allumage (14) reliée à la lampe, caractérisé en ce que la bobine (13) est une bobine à saturation dont l'inductance est diminuée par le courant qui traverse la lampe (11) après l'allumage de la lampe.
